# EUROPEAN PATENT APPLICATION

(11) **EP 2 570 850 A2**
(43) Date of publication of application: **20.03.2013**
(21) Application number: 12184314.8
(22) Date of filing: 13.09.2012
(51) Int. Cl.: G03B 21/26, G06F 3/00, H04N 9/31

(54) **Laser projector with virtual touch screen function**

(30) Priority: 15.09.2011 JP 2011201645; 15.09.2011 JP 2011201788
(71) Applicant: Funai Electric Co., Ltd., Daito-shi, Osaka 574-0013 (JP)
(72) Inventor: Nishigaki, Hiroshi, Osaka 574-0013 (JP); Izukawa, Shintaro, Osaka 574-0013 (JP); Hirano, Atsuya, Osaka 574-0013 (JP)
(74) Representative: Manitz, Finsterwald & Partner GbR

(57) **Abstract**

This projector (100) includes a laser beam emitting portion (61a, 62a, 63a), a projection portion (68a) projecting an image on an arbitrary projection region by scanning laser beams, and a detecting portion (10a) detecting a laser beam reflected by the projection region and a detection object and outputting a detection signal corresponding to the detected laser beam, while the detection signal output from the detecting portion is corrected on the basis of a reference signal corresponding to the laser beam reflected by the projection region and detected by the detecting portion.

## Description

### BACKGROUND OF THE INVENTION

### Field of the Invention

The present invention relates to a projector, and more particularly, it relates to a projector including a laser beam emitting portion emitting a laser beam.

### Description of the Background Art

A projector including a laser beam emitting portion emitting a laser beam is known in general, as disclosed in Japanese Patent Laying-Open No. 2009-123006, for example.

The aforementioned Japanese Patent Laying-Open No. 2009-123006 discloses a projector including three laser beam sources (laser beam emitting portion) emitting three laser beams, i.e., red, green, and blue laser beams, and a scanning unit scanning the laser beams emitted from the laser beam sources. In this projector, an image is projected on a projection region such as a table or a wall surface through a lens provided on an upper portion of the projector by scanning the red, green, and blue laser beams emitted from the laser beam sources by the scanning unit. When a stylus pen (detection object) grasped by a user approaches the image projected on the table, the laser beams emitted from the laser beam sources are reflected by the stylus pen, and the reflected laser beams are received by a light receiver provided on the projector. Thus, the coordinates of the stylus pen grasped by the user in a plane (surface) of the projection region is detected.

However, in the projector described in the aforementioned Japanese Patent Laying-Open No. 2009-123006, when the surface of the projection region is uneven or the reflectance values of the surface of the projection region for the beams are relatively high, the laser beams emitted from the laser beam emitting portion are diffusely reflected by the surface of the projection region, and the diffusely reflected beams are conceivably incident upon the light receiver. Therefore, even if there is no detection object such as the user's finger or the stylus pen on the projection region, the diffusely reflected beams are incident upon the light receiver so that it is falsely recognized that there is the detection object on the projection region. Thus, it is difficult to improve the accuracy of recognizing the detection object on the projection region.

### SUMMARY OF THE INVENTION

The present invention has been proposed in order to solve the aforementioned problem, and an object of the present invention is to provide a projector capable of improving the accuracy of recognizing a detection object on a projection region.

A projector according to a first aspect of the present invention includes a laser beam emitting portion emitting laser beams, a projection portion projecting an image on an arbitrary projection region by scanning the laser beams emitted from the laser beam emitting portion, and a detecting portion detecting a laser beam reflected by the projection region and a detection object, of the laser beams emitted from the laser beam emitting portion and outputting a detection signal corresponding to the detected laser beam, while the detection signal output from the detecting portion is corrected on the basis of a reference signal corresponding to the laser beam reflected by the projection region and detected by the detecting portion.

In the projector according to the first aspect of the present invention, as hereinabove described, the detection signal output from the detecting portion is corrected on the basis of the reference signal corresponding to the laser beam reflected by the projection region and detected by the detecting portion, whereby the detection signal is corrected on the basis of the reference signal even if the detecting portion detects the laser beam in spite of the fact that there is no detection object such as a user's finger or a stylus pen on the projection region, for example, and hence false recognition that there is the detection object on the projection region can be suppressed. Thus, the accuracy of recognizing the detection object on the projection region can be improved.

The aforementioned projector according to the first aspect preferably further includes a control portion correcting the detection signal by subtracting a correction value based on the reference signal corresponding to the laser beam reflected by the projection region from the detection signal output from the detecting portion. According to this structure, the magnitude of the detection signal detected by the detecting portion on the basis of the laser beam reflected by the projection region on which there is no detection object can be reduced by the correction value based on the reference signal, and hence false recognition that there is the detection object on the projection region can be suppressed.

In this case, the aforementioned projector according to the first aspect preferably further includes a storage portion storing the correction value based on the reference signal corresponding to the laser beam reflected by the projection region, and the control portion is preferably configured to correct the detection signal by subtracting the correction value based on the reference signal stored in the storage portion from the detection signal output from the detecting portion. According to this structure, the accuracy of recognizing the laser beam reflected by the projection region and the detection object can be easily improved with the correction value based on the reference signal stored in the storage portion.

In the aforementioned projector including the control portion, the control portion is preferably configured to correct the detection signal by subtracting an average value of the reference signal corresponding to the laser beam reflected by the projection region employed as the correction value from the detection signal output from the detecting portion. According to this structure, the detection signal can be easily corrected with the average value of the reference signal corresponding to the laser beam reflected by the projection region.

In the aforementioned projector including the control portion, the control portion is preferably configured to acquire a correction value from the reference signal corresponding to the laser beam reflected by a point or region corresponding to prescribed coordinates of the projection region scanned by the projection portion and correct the detection signal output from the detecting portion on the basis of the acquired correction value. According to this structure, the accuracy of recognizing the laser beam reflected by the projection region and the detection object can be easily improved with the correction value based on the reference signal corresponding to the laser beam reflected by the point or region corresponding to the prescribed coordinates of the projection region.

In the aforementioned projector acquiring the correction value from the reference signal corresponding to the laser beam reflected by the point or region corresponding to the prescribed coordinates of the projection region, the control portion is preferably configured to acquire correction values from the reference signal corresponding to the laser beam reflected by points corresponding to all coordinates of the projection region scanned by the projection portion and correct the detection signal output from the detecting portion corresponding to at least a frame in which the correction values are acquired on the basis of the acquired correction values. According to this structure, the correction values are acquired from the points corresponding to all coordinates of the projection region so that the detection signal can be accurately corrected over the entire area of the projection region, dissimilarly to a case where the correction values are acquired from points corresponding to the coordinates of a part of the projection region.

In the aforementioned projector acquiring the correction value from the reference signal corresponding to the laser beam reflected by the point or region corresponding to the prescribed coordinates of the projection region, the control portion is preferably configured to acquire correction values from the reference signal corresponding to the laser beam reflected by a plurality of coordinate points in a region corresponding to a row of a scan field, of the projection region scanned by the projection portion and correct the detection signal output from the detecting portion corresponding to at least a frame in which the correction values are acquired on the basis of the acquired correction values. According to this structure, the number of coordinate points where the correction values are acquired is reduced as compared with a case where the correction values are acquired from a reference signal corresponding to a laser beam reflected by coordinate points in a region corresponding to all rows of the scan field, of the projection region, and hence processing load on the control portion can be reduced.

In the aforementioned projector acquiring the correction value from the reference signal corresponding to the laser beam reflected by the point or region corresponding to the prescribed coordinates of the projection region, the control portion is preferably configured to acquire correction values from the reference signal corresponding to the laser beam reflected by a plurality of coordinate points in a region corresponding to plural rows of a scan field, of the projection region scanned by the projection portion and correct the detection signal output from the detecting portion corresponding to at least a frame in which the correction values are acquired on the basis of the acquired correction values. According to this structure, the number of coordinate points where the correction values are acquired is increased as compared with a case where the correction values are acquired from a reference signal corresponding to a laser beam reflected by coordinate points in a region corresponding to a part of the scan field, of the projection region, and hence the detection signal can be more accurately corrected.

In the aforementioned projector acquiring the correction value from the reference signal corresponding to the laser beam reflected by the point or region corresponding to the prescribed coordinates of the projection region, the control portion is preferably configured to acquire correction values of plural frames from reference signals corresponding to laser beams of the plural frames reflected by the projection region scanned by the projection portion and correct the detection signal output from the detecting portion on the basis of the acquired correction values of the plural frames. According to this structure, the correction values of the plural frames are acquired so that the accuracy of the correction values can be further improved as compared with a case where the correction values of one frame are acquired.

In the aforementioned projector including the control portion, the control portion is preferably configured to correct the detection signal output from the detecting portion on the basis of the correction value acquired from the reference signal corresponding to the laser beam of a frame other than a frame in which the detection signal output from the detecting portion exceeds a threshold to determine whether or not there is the detection object on the projection region if determining that the detection signal exceeds the threshold. According to this structure, the reference signal corresponding to the laser beam of the frame in which the detection signal exceeds the threshold is not employed in correction of the detection signal so that the accuracy of the correction value can be inhibited from reduction.

A projector according to a second aspect of the present invention includes a laser beam generation portion emitting a laser beam on the basis of an input image signal, a projection portion projecting an image on an arbitrary projection region by scanning the laser beam emitted from the laser beam generation portion, a detecting portion detecting the laser beam emitted from the laser beam generation portion and reflected by a detection object, and a detection threshold set portion analyzing color information of the input image signal and setting a detection threshold of the detecting portion on the basis of at least an analytical result of the color information to detect the laser beam reflected by the detection object.

As hereinabove described, the projector according to the second aspect of the present invention is provided with the detection threshold set portion analyzing the color information of the input image signal and setting the detection threshold of the detecting portion on the basis of at least the analytical result of the color information to detect the laser beam reflected by the detection object, whereby the detection threshold appropriate to each image can be set on the basis of the analytical result of the color information of the image signal when an image of a color difficult to detect and an image of a color easy to detect are present due to a difference between the laser output values or the like of colors of the projected image, and hence a variation in detection accuracy depending on the colors of the projected image can be suppressed.

In the aforementioned projector according to the second aspect, the detection threshold set portion is preferably configured to set the detection threshold of the detecting portion on the basis of the detection sensitivity characteristics of the detecting portion in addition to the analytical result of the color information to detect the laser beam reflected by the detection object. According to this structure, the detection threshold more appropriate to the colors of the projected image can be set on the basis of the detection sensitivity characteristics of the detecting portion with respect to each color in addition to the color information of the input image signal, and hence a variation in detection accuracy depending on the colors of the projected image can be further suppressed.

In this case, the detection threshold set portion is preferably configured to calculate an expected detection value on the basis of the analytical result of the color information and the detection sensitivity characteristics of the detecting portion and set the detection threshold of the detecting portion on the basis of the expected detection value. According to this structure, the detection threshold set portion can easily set the detection threshold, employing the expected detection value calculated from the analytical result of the color information and the detection sensitivity characteristics of the detecting portion.

In the aforementioned structure of setting the detection threshold of the detecting portion on the basis of the detection sensitivity characteristics of the detecting portion in addition to the analytical result of the color information, the detection threshold set portion is preferably configured to set the detection threshold of the detecting portion on the basis of the detection sensitivity characteristics of the detecting portion for each wavelength. According to this structure, the detection threshold of the detecting portion appropriate to the colors of the projected image can be accurately set employing the detection sensitivity characteristics for each wavelength even if a projection image is formed with a plurality of laser beams of different wavelengths.

In the aforementioned structure of setting the detection threshold of the detecting portion on the basis of the detection sensitivity characteristics of the detecting portion in addition to the analytical result of the color information, the detection threshold set portion is preferably configured to set the detection threshold of the detecting portion on the basis of the reflectance value of the detection object for the laser beam in addition to the analytical result of the color information and the detection sensitivity characteristics of the detecting portion. According to this structure, the detection threshold of the detecting portion can be set in consideration of the reflectance value of the detection object for the laser beam in addition to the analytical result of the color information and the detection sensitivity characteristics of the detecting portion, and hence the detection threshold appropriate to the colors of the projected image can be more accurately set even if the reflectance value of the detection object for the laser beam varies with the color of the laser beam.

In the aforementioned structure of setting the detection threshold of the detecting portion on the basis of the detection sensitivity characteristics of the detecting portion in addition to the analytical result of the color information, the detection threshold set portion is preferably configured to set the detection threshold of the detecting portion on the basis of the transmittance value of an optical system for the laser beam in addition to the analytical result of the color information and the detection sensitivity characteristics of the detecting portion. According to this structure, the detection threshold of the detecting portion can be calculated in consideration of the transmittance value of the optical system for the laser beam in addition to the analytical result of the color information and the detection sensitivity characteristics of the detecting portion, and hence the detection threshold appropriate to the colors of the projected image can be more accurately calculated even if the transmittance value of the optical system for the laser beam varies with the color of the laser beam.

In the aforementioned projector according to the second aspect, the laser beam generation portion preferably includes a red laser beam generation portion emitting a red laser beam, a green laser beam generation portion emitting a green laser beam, and a blue laser beam generation portion emitting a blue laser beam, and the detection threshold set portion is preferably configured to set the detection threshold of the detecting portion on the basis of an analytical result of color information of each of the red laser beam generation portion, the green laser beam generation portion, and the blue laser beam generation portion. According to this structure, the detection threshold appropriate to the colors of the projected image can be easily set on the basis of the analytical result of the color information of each of the red laser beam generation portion, the green laser beam generation portion, and the blue laser beam generation portion.

In this case, the detection threshold set portion is preferably configured to set the detection threshold of the detecting portion on the basis of a laser output value as the analytical result of the color information of each of the red laser beam generation portion, the green laser beam generation portion, and the blue laser beam generation portion. According to this structure, the detection threshold appropriate to the colors of the projected image can be more easily set on the basis of the laser output value as the analytical result of the color information of each of the red laser beam generation portion, the green laser beam generation portion, and the blue laser beam generation portion. Particularly when the maximum laser output varies from color to color, the detection threshold appropriate to the colors of the projected image can be effectively set.

In the aforementioned structure of setting the detection threshold of the detecting portion on the basis of the laser output value, the detection threshold set portion is preferably configured to calculate an expected detection value on the basis of the laser output value of each of the red laser beam generation portion, the green laser beam generation portion, and the blue laser beam generation portion and the detection sensitivity characteristics of the detecting portion and set the detection threshold of the detecting portion on the basis of the expected detection value. According to this structure, the detection threshold set portion can more accurately set the detection threshold, employing the expected detection value calculated from the laser output value of each of the red laser beam generation portion, the green laser beam generation portion, and the blue laser beam generation portion and the detection sensitivity characteristics of the detecting portion even if the projection image is formed with a plurality of laser beams having the laser output values of the colors of the projected image different from each other and the wavelengths different from each other.

In the aforementioned structure of calculating the expected detection value on the basis of the laser output value and the detection sensitivity characteristics of the detecting portion, the detection threshold set portion is preferably configured to calculate the expected detection value of the detecting portion on the basis of the different reflectance values of the detection object for the red, green, and blue laser beams in addition to the laser output value of each of the red laser beam generation portion, the green laser beam generation portion, and the blue laser beam generation portion and the detection sensitivity characteristics of the detecting portion. According to this structure, the expected detection value of the detecting portion can be accurately calculated in consideration of the different reflectance values of the detection object for the red, green, and blue laser beams in addition to the laser output value of each of the red laser beam generation portion, the green laser beam generation portion, and the blue laser beam generation portion and the detection sensitivity characteristics of the detecting portion. Thus, the detection threshold appropriate to the colors of the projected image can be more accurately set.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 schematically illustrates a used state of a projector according to a first embodiment of the present invention;
Fig. 2 is a block diagram showing the structure of the projector according to the first embodiment of the present invention;
Fig. 3 is a top view showing a projection region of the projector according to the first embodiment of the present invention;
Fig. 4 illustrates a state where laser beams are emitted from the projector according to the first embodiment of the present invention;
Fig. 5 is a graph showing a case where laser beams reflected by the projection region, of the laser beams emitted from the projector according to the first embodiment of the present invention are detected;
Fig. 6 is a graph showing a case where correction values are acquired from reference signals corresponding to laser beams reflected by eight coordinate points in a region corresponding to a row of a scan field, of the projection region according to the first embodiment of the present invention;
Fig. 7 is a graph showing a case where there is a detection object in the projection region according to the first embodiment of the present invention so that detection signals exceed a determination threshold;
Fig. 8 illustrates a control flow for correcting detection signals corresponding to the laser beams reflected by the projection region according to the first embodiment of the present invention;
Fig. 9 illustrates a control flow for correcting detection signals corresponding to laser beams reflected by a projection region according to a second embodiment of the present invention;
Fig. 10 illustrates a first modification of each of the first and second embodiments of the present invention;
Fig. 11 illustrates a second modification of each of the first and second embodiments of the present invention;
Fig. 12 schematically illustrates a used state of a projector according to a third embodiment of the present invention;
Fig. 13 is a block diagram showing the structure of the projector according to the third embodiment of the present invention;
Fig. 14 illustrates the detection sensitivity characteristics of a detecting portion of the projector according to the third embodiment of the present invention;
Fig. 15 illustrates a method for calculating an expected detection voltage of the projector according to the third embodiment of the present invention;
Fig. 16 illustrates a state where a projection region of the projector according to the third embodiment of the present invention is divided into sixteen parts in the form of a lattice;
Fig. 17 illustrates a detection threshold (large) and a detection threshold (small) set in the detecting portion of the projector according to the third embodiment of the present invention;
Fig. 18 is a flowchart for illustrating processing for setting a detection threshold of the projector according to the third embodiment of the present invention;
Fig. 19 is a flowchart for illustrating processing for calculating coordinates of a detection object of the projector according to the third embodiment of the present invention; and
Fig. 20 illustrates a state where a projection region according to a fourth embodiment of the present invention is divided on the basis of color information.

### DESCRIPTION OF THE PREFERRED EMBODIMENTS

Embodiments of the present invention are now described with reference to the drawings.

### (First Embodiment)

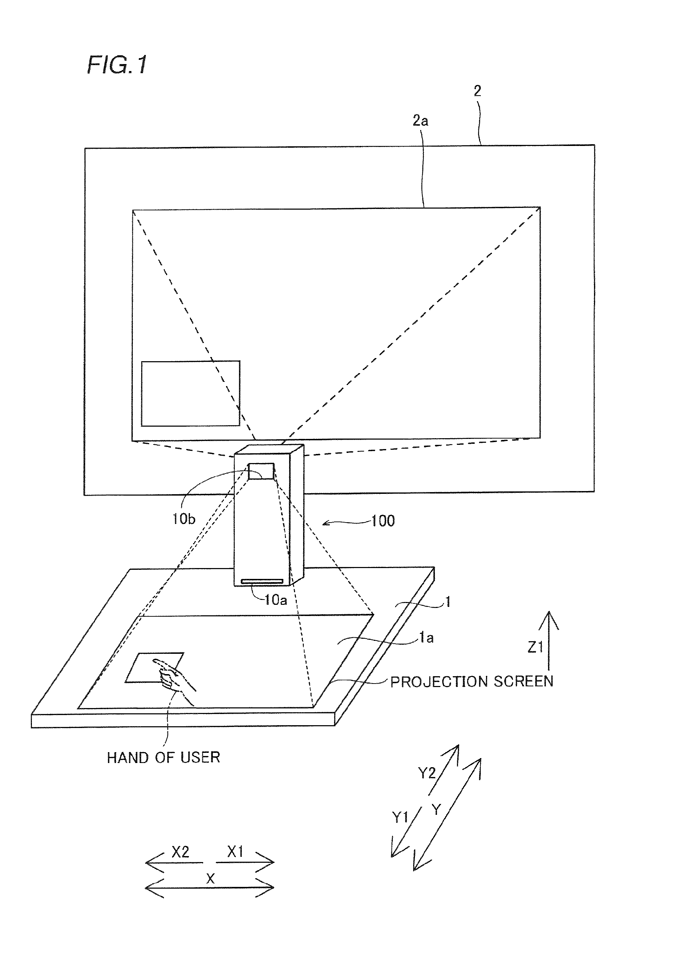

First, the structure of a projector 100 according to a first embodiment of the present invention is described with reference to Figs. 1 to 7.

The projector 100 according to the first embodiment of the present invention is disposed on a table 1 for use, as shown in Fig. 1. The projector 100 is so configured that an image 2a for presentation (for display) is projected on a projection region such as a screen 2. The table 1 and the screen 2 are examples of the "projection region" in the present invention. Furthermore, the projector 100 is so configured that an image 1a similar to the image 2a for presentation is projected on the upper surface of a projection region such as the table 1. The size of the image 1a projected on the table 1 is smaller than the size of the image 2a projected on the screen 2. The projector 100 is configured to allow a user to manipulate the image 1a projected on the table 1 with his/her finger.

A photodetector 10a to detect red, green, and blue laser beams is provided on a side surface of the projector 100 closer to the side (along arrow Y1) on which the image 1a is projected. The photodetector 10a is an example of the "detecting portion" in the present invention. This photodetector 10a includes a photodiode or the like. The photodetector 10a is configured to be capable of detecting red, green, and blue laser beams reflected by the user's finger.

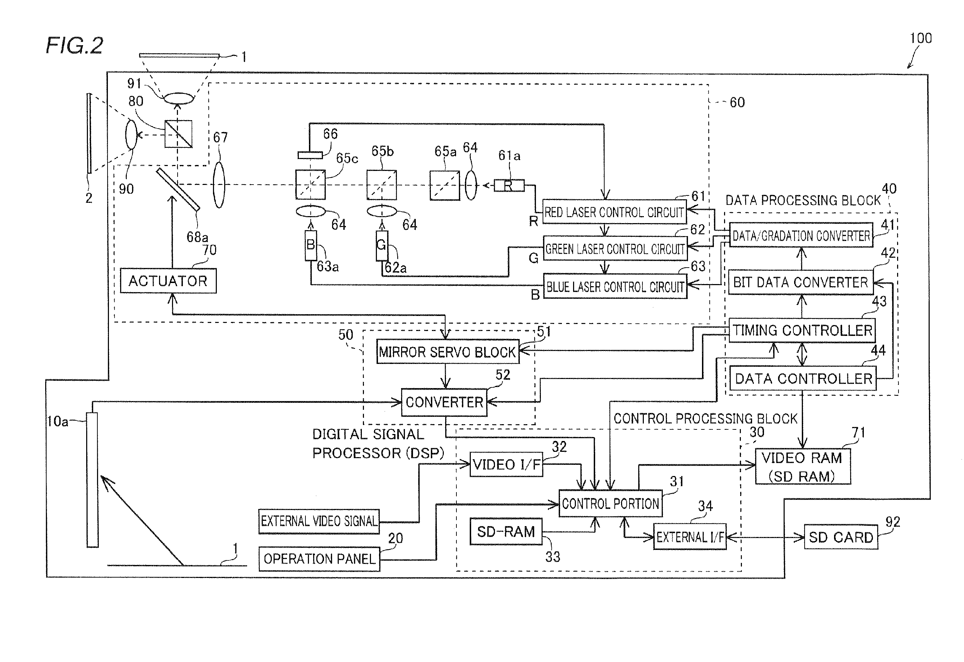

A laser projection aperture 10b through which visible red, green, and blue laser beams are emitted is provided in a region of the projector 100 above the photodetector 10a. As shown in Fig. 2, the projector 100 includes an operation panel 20, a control processing block 30, a data processing block 40, a digital signal processor (DSP) 50, a laser beam source 60, a video RAM (SD RAM) 71, a beam splitter 80, and two magnifying lenses 90 and 91.

The control processing block 30 includes a control portion 31 controlling the entire projector 100, a video I/F 32 that is an interface (I/F) to receive an external video signal, an SD-RAM 33 storing various types of data, and an external I/F 34.

The data processing block 40 includes a data/gradation converter 41, a bit data converter 42, a timing controller 43, and a data controller 44. The digital signal processor 50 includes a mirror servo block 51 and a converter 52.

The laser beam source 60 includes a red laser control circuit 61, a green laser control circuit 62, and a blue laser control circuit 63. The red laser control circuit 61 is connected with a red LD (laser diode) 61a emitting a red (visible) laser beam. The green laser control circuit 62 is connected with a green LD 62a emitting a green (visible) laser beam. The blue laser control circuit 63 is connected with a blue LD 63a emitting a blue (visible) laser beam. The red LD 61a, the green LD 62a, and the blue LD 63a are examples of the "laser beam emitting portion" in the present invention.

The laser beam source 60 includes three collimator lenses 64, three polarizing beam splitters 65a, 65b, and 65c, a light detector 66, a lens 67, a MEMS mirror 68a to scan laser beams in the horizontal direction and the vertical direction, and an actuator 70 to drive the MEMS mirror 68a in the horizontal direction and the vertical direction. The MEMS mirror 68a is an example of the "projection portion" in the present invention.

The laser beams emitted from the red LD 61a, the green LD 62a, and the blue LD 63a are incident upon the common MEMS mirror 68a. The MEMS mirror 68a scans the red, green, and blue laser beams emitted from the red LD 61a, the green LD 62a, and the blue LD 63a, whereby the images 1a and 2a are projected on the table 1 and the screen 2, respectively.

The operation panel 20 is provided on a front or side surface of a housing of the projector 100. The operation panel 20 includes a display (not shown) to display operation contents, switches accepting operational inputs into the projector 100, and so on, for example. The operation panel 20 is configured to transmit a signal responsive to operation contents to the control portion 31 of the control processing block 30 when accepting an operation of the user.

The projector 100 is so configured that the external video signal supplied from outside is input into the video I/F 32. The external I/F 34 is so configured that a memory such as an SD card 92 is mountable thereon. A portable memory such as a USB memory other than the SD card 92 is also mountable on the external I/F 34. A PC or the like is connectable to the external I/F 34 through a cable or the like, and the external I/F 34 is configured to serve as an output portion capable of transmitting positional information or the like of the user's finger to the PC. The projector 100 is so configured that the control portion 31 retrieves data from the SD card 92 and the video RAM 71 stores the retrieved data.

The control portion 31 is configured to control display of a picture based on image data temporarily held in the video RAM 71 by intercommunicating with the timing controller 43 of the data processing block 40.

In the data processing block 40, the timing controller 43 is configured to retrieve data held in the video RAM 71 through the data controller 44 on the basis of a signal output from the control portion 31. The data controller 44 is configured to transmit the retrieved data to the bit data converter 42. The bit data converter 42 is configured to transmit the data to the data/gradation converter 41 on the basis of a signal from the timing controller 43. The bit data converter 42 has a function of converting externally supplied image data into data suitable to a system projectable with the laser beams.

The data/gradation converter 41 is configured to convert the data output from the bit data converter 42 into color gradation data of red (R), green (G), and blue (B) and to transmit the data after conversion to the red laser control circuit 61, the green laser control circuit 62, and the blue laser control circuit 63.

The red laser control circuit 61 is configured to transmit the data from the data/gradation converter 41 to the red LD 61a. The green laser control circuit 62 is configured to transmit the data from the data/gradation converter 41 to the green LD 62a. The blue laser control circuit 63 is configured to transmit the data from the data/gradation converter 41 to the blue LD 63a.

Signals received by the photodetector 10a provided on the side surface of the projector 100 closer to the side on which the image 1a is projected are input into the control portion 31 through the converter 52. The laser beams emitted from the red LD 61a, the green LD 62a, and the blue LD 63a are scanned along the same scanning path.

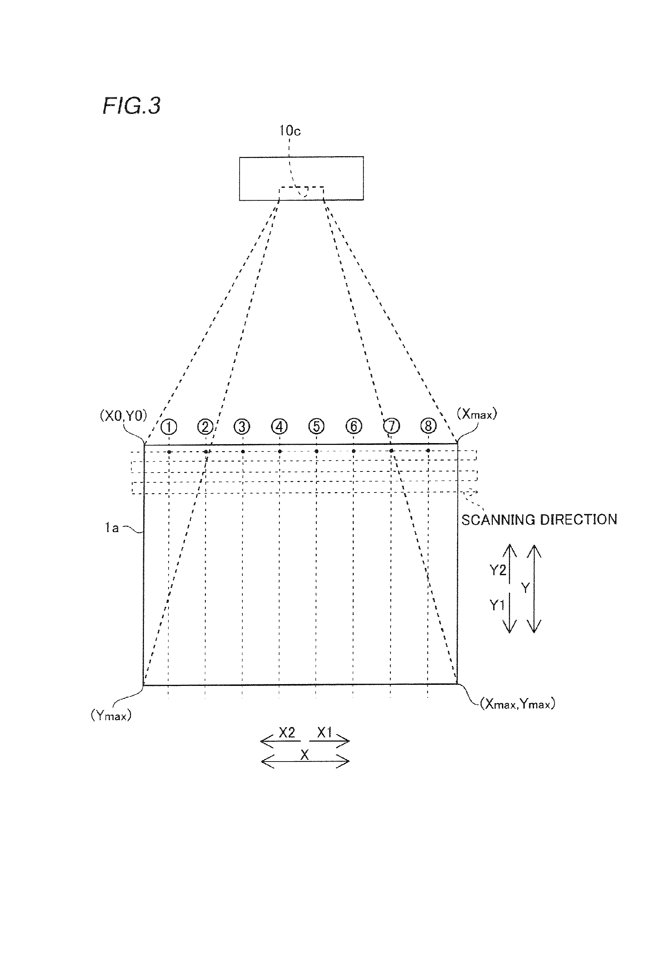

As shown in Fig. 3, the image 1a projected on the table 1 has a rectangular shape. Furthermore, the image 1a has coordinates of X0 to Xₘₐₓ in a direction X and coordinates of Y0 to Yₘₐₓ in a direction Y.

The red, green, and blue laser beams are continuously alternately scanned in the horizontal direction (from an arrow X2 direction side to an arrow X1 direction side or from the arrow X1 direction side to the arrow X2 direction side) and the vertical direction (from an arrow Y2 direction side to an arrow Y1 direction side). Specifically, the MEMS mirror 68a scans the red, green, and blue laser beams in the horizontal direction (from the arrow X2 direction side to the arrow X1 direction side), and thereafter scans the red, green, and blue laser beams in one coordinate in the vertical direction (from the arrow Y2 direction side to the arrow Y1 direction side). Then, the MEMS mirror 68a scans the red, green, and blue laser beams in the horizontal direction (from the arrow X1 direction side to the arrow X2 direction side), and thereafter scans the red, green, and blue laser beams in one coordinate in the vertical direction (from the arrow Y2 direction side to the arrow Y1 direction side). The MEMS mirror 68a is configured to repeat the aforementioned scanning until the same reaches coordinates (Xₘₐₓ, Yₘₐₓ).

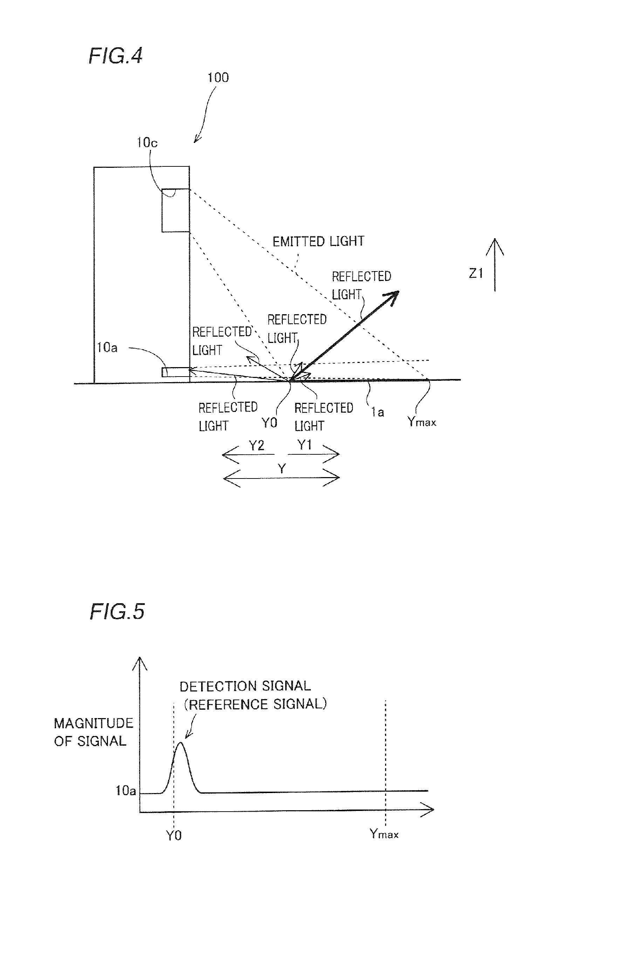

According to the first embodiment, it is assumed that the laser beams from the red LD 61a, the green LD 62a, and the blue LD 63a of the projector 100 are emitted to the table 1 and the laser beams emitted to the table 1 are partially incident upon the photodetector 10a when there is no user's finger on the table 1, as shown in Fig. 4. If a surface of the table 1 in the vicinity of the coordinate Y0 is uneven, for example, the photodetector 10a detects laser beams (reflected light) reflected by the table 1 in the vicinity of the coordinate Y0, of the laser beams (emitted light) emitted from the red LD 61a, the green LD 62a, and the blue LD 63a, as shown in Fig. 5 and outputs detection signals and reference signals corresponding to the detected laser beams to the control portion 31.

According to the first embodiment, the control portion 31 is configured to acquire correction values from the reference signals corresponding to the laser beams reflected by eight coordinate points (coordinate point 1, coordinate point 2, coordinate point 3, coordinate point 4, coordinate point 5, coordinate point 6, coordinate point 7, and coordinate point 8) obtained by dividing a region corresponding to a row of a scan field in the vertical direction (direction Y), of the table 1 scanned by the MEMS mirror 68a into eight equal parts in the direction X, as shown in Fig. 3. Furthermore, the control portion 31 is configured to correct detection signals corresponding to a frame in which the correction values are acquired on the basis of the correction values acquired on the basis of the reference signals.

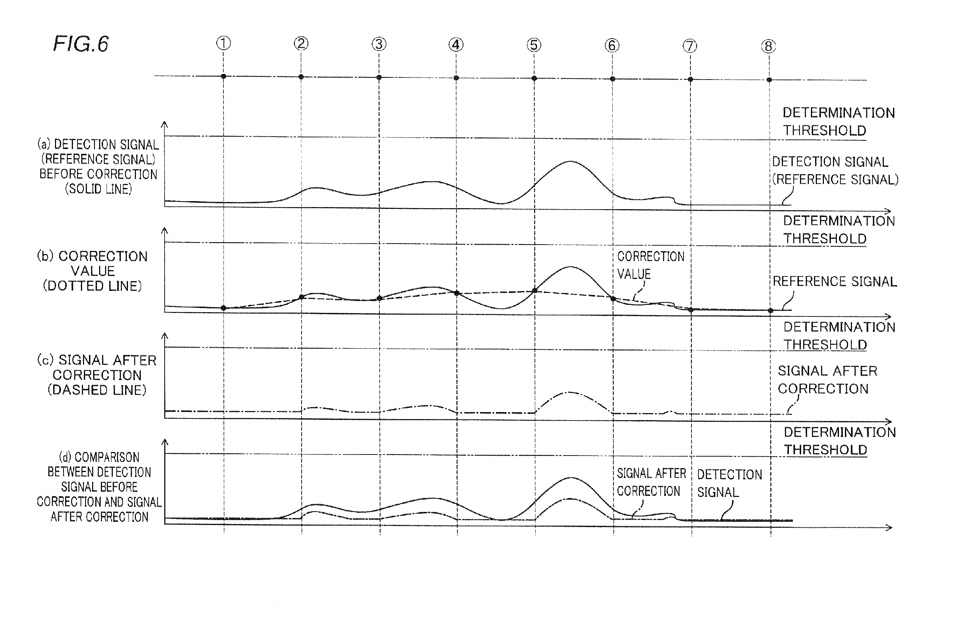

Specifically, as shown in Fig. 6, if there is no user's finger on the table 1 and the photodetector 10a detects the reflected light reflected by the uneven shape of the surface of the table 1, the photodetector 10a detects the laser beams reflected by a row of the scan field in the vertical direction (direction Y), of the table 1 as the detection signals and the reference signals before correction (solid line). The SD-RAM 33 (see Fig. 2) stores the laser beams detected by the photodetector 10a as light intensity data. The relatively smaller magnitude of the detection signals and the reference signals means the smaller reflectance value of the table 1, and the relatively larger magnitude of the detection signals and the reference signals means the larger reflectance value of the table 1.

The control portion 31 is configured to acquire the correction values on the basis of the reference signals corresponding to the laser beams detected by the photodetector 10a. Specifically, the control portion 31 is configured to acquire the correction values (dotted line) shown in Fig. 6(b) by connecting points corresponding to the coordinate points 1 to 8 of the reference signals (solid line) of the detected signals (solid line) and the reference signals (solid line) that have been detected shown in Fig. 6(a) by a line.

The control portion 31 is configured to acquire signals after correction (dashed line) shown in Fig. 6(c) by subtracting the correction values (dotted line) acquired on the basis of the reference signals from the detection signals (solid line). Thus, the magnitude of the detection signals is corrected to be reduced over the entire area of the coordinate points 1 to 8, as shown in comparison between the detection signals before correction and the signals after correction shown in Fig. 6(d).

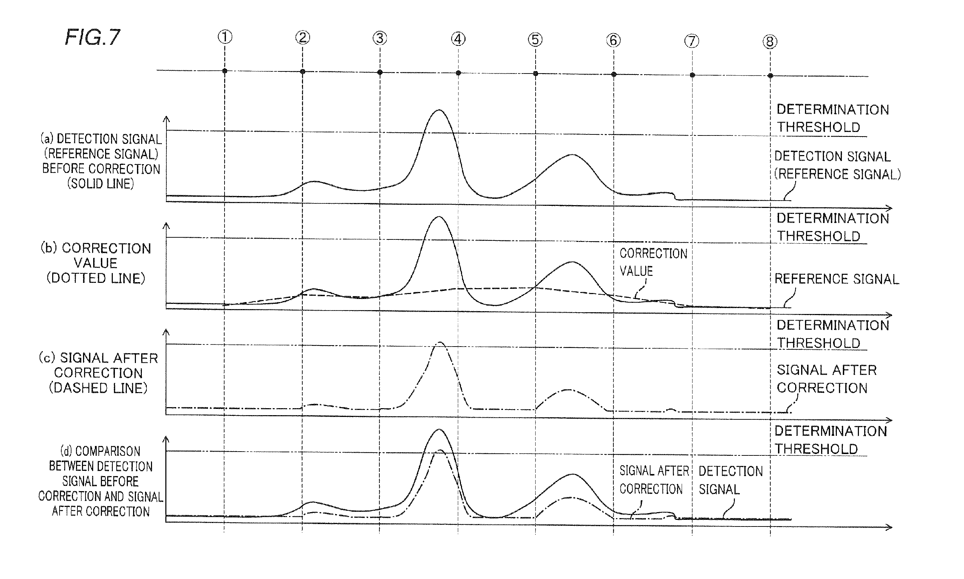

According to the first embodiment, if there is the user's finger on the table 1 (signals between the coordinate points 3 and 4) and the reflected light reflected by the uneven shape of the table 1 is detected, the photodetector 10a detects relatively large detection signals in a region of the table 1 between the coordinate points 3 and 4 and a region of the table 1 between the coordinate points 5 and 6, as shown in Fig. 7(a). Furthermore, the control portion 31 is configured not to acquire correction values from a frame in which detection signals exceed a determination threshold to determine whether or not there is the user's finger on the table 1 if determining that the detection signals output from the photodetector 10a exceed the determination threshold. The control portion 31 is configured to correct the detection signals output from the photodetector 10a on the basis of the correction values acquired from the reference signals corresponding to the laser beams of a frame (frame in which the correction values have been previously acquired) other than the frame in which the detection signals exceed the determination threshold, as shown in Fig. 7(b).

The control portion 31 is configured to acquire the signals after correction (dashed line) shown in Fig. 7(c) by subtracting the correction values (dotted line) of the frame in which the correction values have been previously acquired from the detection signals (solid line). Thus, the magnitude of the detection signals (solid line) is corrected to be reduced over the entire area of the coordinate points 1 to 8, as shown in comparison between the detection signals before correction and the signals after correction shown in Fig. 7(d). Although the relatively large detection signals (detection signals between the coordinate points 3 and 4) of the detection signals are corrected to relatively small signals, the magnitude of the signals exceeds the determination threshold so that the control portion 31 determines that the detection signals between the coordinate points 3 and 4 indicate the user's finger. Furthermore, the relatively large detection signals (detection signals between the coordinate points 5 and 6) of the detection signals are corrected to relatively small signals, and the magnitude of the signals does not exceed the determination threshold so that the control portion 31 determines that the detection signals between the coordinate points 5 and 6 do not indicate the user's finger.

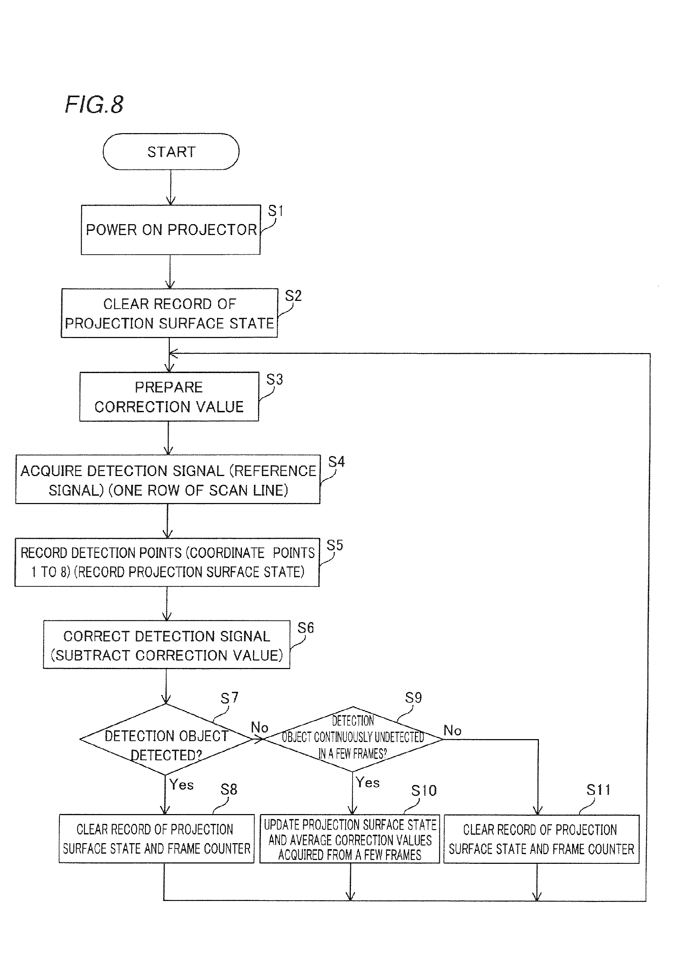

Next, control operations for correcting the detection signals corresponding to the laser beams reflected by the table 1 are described with reference to Figs. 6 to 8. First, at a step S1 in Fig. 8, the projector 100 is powered on, and the image 1a is projected on the table 1. Next, at a step S2, data on a projection surface state (state of the surface of the table 1) stored in the SD-RAM 33 of the projector 100 is cleared.

Next, at a step S3, preparation of correction values is started, and the MEMS mirror 68a scans the table 1 with the red, green, and blue laser beams. Then, at a step S4, the photodetector 10a detects the laser beams reflected by a region corresponding to a row of the scan field in the vertical direction (direction Y), of the table 1 scanned by the MEMS mirror 68a. At this time, the detection signals and the reference signals (solid line) are acquired, as shown in Fig. 6. If the detection signals (solid line) are larger than (exceed) the determination threshold, the control portion 31 does not acquire correction values from this frame. Then, the detection signals are corrected with the previously acquired correction values.

Next, at a step S5 in Fig. 8, the correction values are acquired from the reference signals corresponding to the laser beams reflected by the coordinate points 1 to 8 in the region corresponding to a row of the scan field in the vertical direction (direction Y), of the table 1. At this time, the correction values (dotted line) based on the reference signals (solid line) are acquired, as shown in Fig. 6.

Next, according to the first embodiment, the detection signals are corrected by subtracting the correction values (dotted line) based on the reference signals corresponding to the laser beams reflected by the table 1 from the detection signals (solid line) output from the photodetector 10a at a step S6 in Fig. 8.

If there is no user's finger on the table 1, for example, the photodetector 10a detects the reflected light reflected by the uneven shape of the surface of the table 1 and the signals after correction (dashed line) shown in Fig. 6(c) are acquired by subtracting the correction values (dotted line) shown in Fig. 6(b) acquired on the basis of the reference signals from the detection signals (solid line) shown in Fig. 6(a). Thus, the magnitude of the detection signals (solid line) is corrected to be reduced over the entire area of the coordinate points 1 to 8, as shown in Fig. 6(d).

If there is the user's finger on the table 1 (signals between the coordinate points 3 and 4) and the reflected light reflected by the uneven shape of the table 1 is detected (signals between the coordinate points 5 and 6), the signals after correction (dashed line) shown in Fig. 7(c) are acquired by subtracting the correction values (dotted line) of the frame in which the correction values have been previously acquired shown in Fig. 7(b) from the detection signals (solid line) shown in Fig. 7(a). Thus, the magnitude of the detection signals (solid line) is corrected to be reduced over the entire area of the coordinate points 1 to 8, as shown in Fig. 7(d).

Next, at a step S7 in Fig. 8, the control portion 31 determines whether or not there is the user's finger on the table 1. In other words, the control portion 31 determines whether or not the signals after correction (dashed line) are larger than (exceed) the determination threshold at the step S7. If determining that there is the user's finger on the table 1 at the step S7 (the signals after correction are larger than the determination threshold) (see Fig. 7), the process advances to a step S8, and the data on the projection surface state and the frame counter stored in the SD-RAM 33 of the projector 100 are cleared. Thereafter, the process returns to the step S3.

If determining that there is no user's finger on the table 1 at the step S7 (the signals after correction are smaller than the determination threshold) (see Fig. 6), the process advances to a step S9. If determining that there is no user's finger in a prescribed number of frames at the step S9 (undetected), the process advances to a step S10. At the step S10, the data on the projection surface state stored in the SD-RAM 33 of the projector 100 is updated, and correction values acquired from the prescribed number of frames are averaged and stored in the SD-RAM 33. Thereafter, the process returns to the step S3.

If determining that there is the user's finger in the prescribed number of frames at the step S9 (detected), the data on the projection surface state and the frame counter stored in the SD-RAM 33 of the projector 100 are cleared at a step S11. Thereafter, the process returns to the step S3.

According to the first embodiment, as hereinabove described, the detection signals output from the photodetector 10a are corrected on the basis of the reference signals corresponding to the laser beams reflected by the table 1 and detected by the photodetector 10a, whereby the detection signals are corrected on the basis of the reference signals even if the photodetector 10a detects the laser beams in spite of the fact that there is no user's finger on the table 1, and hence the control portion 31 can be inhibited from falsely recognizing that there is the user's finger on the table 1. Thus, the accuracy of recognizing the user's finger on the table 1 can be improved.

According to the first embodiment, as hereinabove described, the control portion 31 correcting the detection signals by subtracting the correction values based on the reference signals corresponding to the laser beams reflected by the table 1 from the detection signals output from the photodetector 10a is provided, whereby the magnitude of the detection signals detected by the photodetector 10a on the basis of the laser beams reflected by the table 1 on which there is no user's finger can be reduced by the correction values based on the reference signals, and hence the control portion 31 can be inhibited from falsely recognizing that there is the user's finger on the table 1.

According to the first embodiment, as hereinabove described, the detection signals are corrected by subtracting the correction values based on the reference signals stored in the SD-RAM 33 from the detection signals output from the photodetector 10a, whereby the accuracy of recognizing the laser beams reflected by the table 1 and the user's finger can be easily improved with the correction values based on the reference signals stored in the SD-RAM 33.

According to the first embodiment, as hereinabove described, the detection signals are corrected by subtracting the average value of the reference signals corresponding to the laser beams reflected by the table 1 employed as a correction value from the detection signals output from the photodetector 10a, whereby the detection signals can be easily corrected with the average value of the reference signals corresponding to the laser beams reflected by the table 1.

According to the first embodiment, as hereinabove described, the correction values are acquired from the reference signals corresponding to the laser beams reflected by the eight coordinate points 1 to 8 in the region corresponding to a row of the scan field, of the table 1 scanned by the MEMS mirror 68a, and the detection signals output from the photodetector 10a corresponding to at least the frame in which the correction values are acquired are corrected on the basis of the acquired correction values. Thus, the number of coordinate points where the correction values are acquired is reduced as compared with a case where the correction values are acquired from reference signals corresponding to laser beams reflected by coordinate points in a region corresponding to all rows of the scan field, of the table 1, and hence the detection signals can be easily corrected.

According to the first embodiment, as hereinabove described, the control portion 31 corrects the detection signals output from the photodetector 10a on the basis of the correction values acquired from the reference signals corresponding to the laser beams of the frame other than the frame in which the detection signals exceed the determination threshold to determine whether or not there is the user's finger on the table 1 if determining that the detection signals output from the photodetector 10a exceed the determination threshold, whereby the reference signals corresponding to the laser beams of the frame in which the detection signals exceed the determination threshold are not employed in correction of the detection signals so that the accuracy of the correction values can be inhibited from reduction.

According to the first embodiment, as hereinabove described, the detection signals output from the photodetector 10a are corrected every frame, whereby the correction values are updated every frame, and hence the detection signals can be more accurately corrected.

### (Second Embodiment)

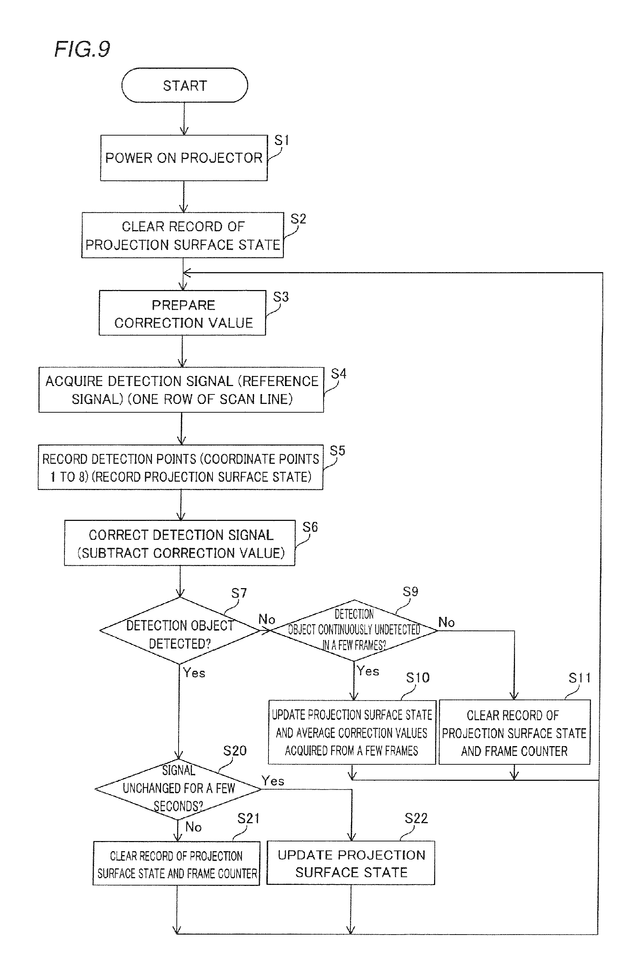

A second embodiment is now described with reference to Figs. 7 and 9. In this second embodiment, a control portion 31 determines whether signals after correction (dashed line) indicate a user's finger or a fixed obstacle if the signals after correction (dashed line) are larger than a determination threshold (exceed the determination threshold), dissimilarly to the aforementioned first embodiment in which the data on the projection surface state and the frame counter stored in the SD-RAM 33 of the projector 100 are cleared if the signals after correction (dashed line) are larger than the determination threshold (exceed the determination threshold).

According to this second embodiment, control operations at steps S1 to S7 are performed, similarly to the aforementioned first embodiment. If determining that there is the user's finger on the table 1 at the step S7 (the signals after correction are larger than the determination threshold) (see Fig. 7), the control portion 31 determines whether or not the magnitude of detection signals detected by a photodetector 10a has been unchanged in a prescribed time period (a few seconds) at a step S20.

If determining that the magnitude of the detection signals detected by the photodetector 10a has been changed in the prescribed time period (a few seconds) at the step S20, the control portion 31 determines that the detection signals detected by the photodetector 10a indicate the user's finger and advances to a step S21. At the step S21, data on a projection surface state and the frame counter stored in a SD-RAM 33 of a projector 100 are cleared. Thereafter, the control portion 31 returns to the step S3.

If determining that the magnitude of the detection signals detected by the photodetector 10a has been unchanged in the prescribed time period (a few seconds) at the step S20, the control portion 31 determines that the detection signals detected by the photodetector 10a indicate the fixed obstacle not the user's finger and advances to a step S22. At the step S22, the data on the projection surface state stored in the SD-RAM 33 of the projector 100 is updated, and the signals after correction (dashed line) larger than (exceeding) the determination threshold are stored. Thereafter, the control portion 31 returns to the step S3.

The remaining structure and control operations of the second embodiment are similar to those of the aforementioned first embodiment.

According to the second embodiment, as hereinabove described, the control portion 31 acquires correction values from reference signals corresponding to laser beams of a frame in which the detection signals output from the photodetector 10a exceed the determination threshold to determine whether or not there is the user's finger on the table 1 and corrects the detection signals output from the photodetector 10a on the basis of the acquired correction values if determining that the detection signals exceed the determination threshold and determining that the magnitude of the detection signals corresponding to the laser beams has been unchanged in the prescribed time period (a few seconds). Thus, the control portion 31 can determine that there is not the user's finger but the fixed obstacle in the frame if determining that the detection signals exceed the determination threshold for the prescribed time period (a few seconds), and hence the control portion 31 can correct the detection signals with the correction values acquired from the reference signals corresponding to the laser beams of the frame in which it has been considered that there is the obstacle.

The remaining effects of the second embodiment are similar to those of the aforementioned first embodiment.

### (Third Embodiment)

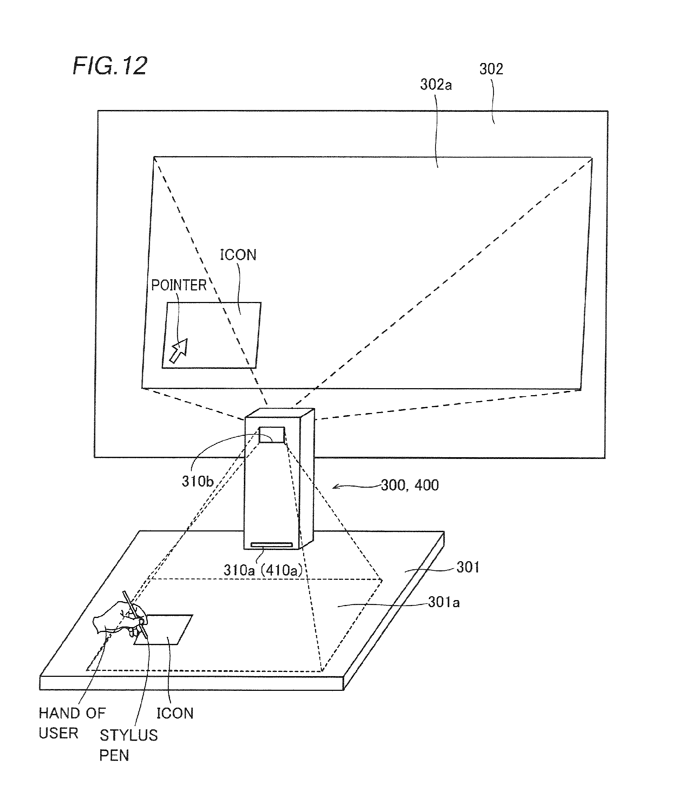

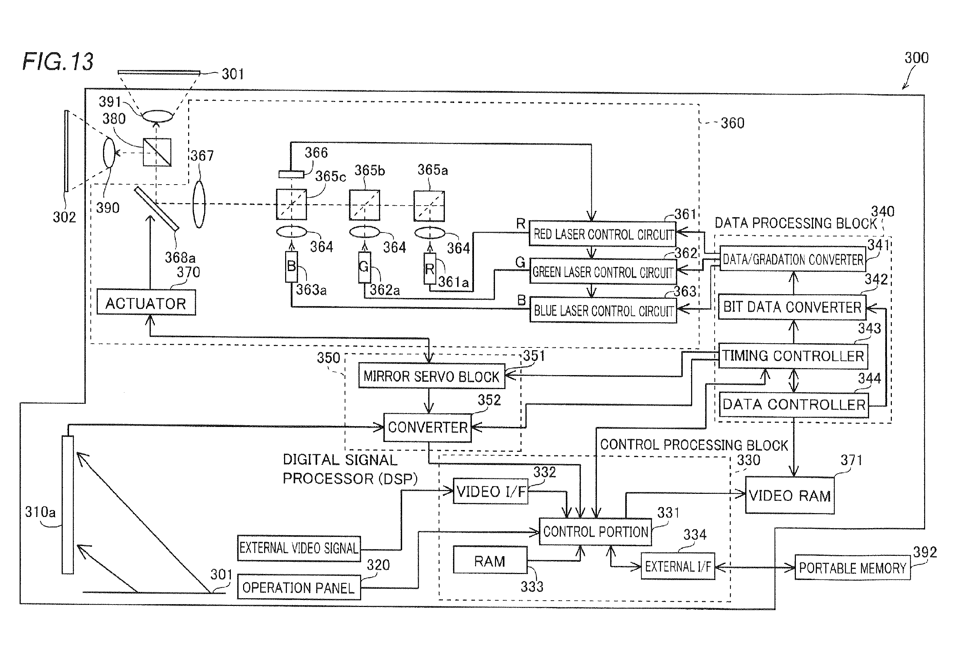

First, the structure of a projector 300 according to a third embodiment of the present invention is described with reference to Figs. 12 and 13.

The projector 300 according to the third embodiment of the present invention is disposed on a table 301 for use, as shown in Fig. 12. The projector 300 is so configured that an image 302a for presentation (for display) is projected on a projection region such as a screen 302. Furthermore, the projector 300 is so configured that an image 301a similar to the image 302a for presentation is projected on the upper surface of a projection region such as the table 301. The size of the image 301a projected on the table 301 is smaller than the size of the image 302a projected on the screen 302. The table 301 and the screen 302 are examples of the "projection region" in the present invention.

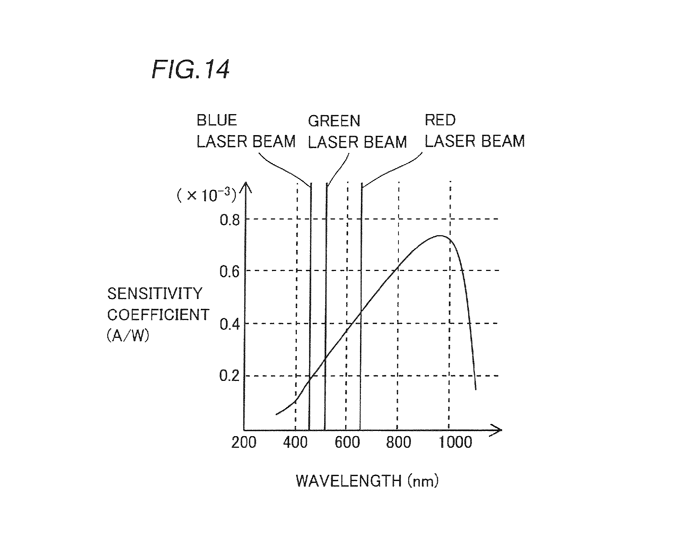

A silicon photodiode 310a to detect laser beams reflected by a user's finger or a stylus pen is provided on a side surface of the projector 300 closer to the side on which the image 301a is projected. The silicon photodiode 310a has a function of detecting laser beams by converting received laser beams into currents. Furthermore, the silicon photodiode 310a has such detection sensitivity characteristics that the detection sensitivity varies with the wavelengths (colors) of the received beams, as shown in Fig. 14. More specifically, the detection sensitivity of the silicon photodiode 310a is high in order of red (650 nm), green (520 nm), and blue (440 nm), and gradually increases as approaching red from blue. The silicon photodiode 310a is an example of the "detecting portion" in the present invention.

A laser projection aperture 310b through which visible red, green, and blue laser beams are emitted is provided in a region of the projector 300 above the silicon photodiode 310a, as shown in Fig. 12.

The projector 300 includes an operation panel 320, a control processing block 330, a data processing block 340, a digital signal processor (DSP) 350, a laser beam source 360, a video RAM 371, a beam splitter 380, and two magnifying lenses 390 and 391, as shown in Fig. 13. The laser beam source 360 is an example of the "laser beam generation portion" in the present invention. The beam splitter 380 and the magnifying lenses 390 and 391 are examples of the "optical system" in the present invention.

The control processing block 330 includes a control portion 331 controlling the entire projector 300, a video I/F 332 that is an interface (I/F) to receive an external video signal, a RAM 333, and an external I/F 334.

The data processing block 340 includes a data/gradation converter 341, a bit data converter 342, a timing controller 343, and a data controller 344.

The digital signal processor 350 includes a mirror servo block 351 and a converter 352.

The laser beam source 360 includes a red laser control circuit 361, a green laser control circuit 362, and a blue laser control circuit 363. The red laser control circuit 361, the green laser control circuit 362, and the blue laser control circuit 363 are connected with a red LD (laser diode) 361a emitting a red laser beam (visible laser beam), a green LD 362a emitting a green laser beam (visible laser beam), and a blue LD 363a emitting a blue laser beam (visible laser beam), respectively. The laser beam source 360 is configured to emit the laser beams on the basis of the external video signal, described later, input into the projector 300 or data stored in a portable memory 392. The red LD 361a is an example of the "red laser beam generation portion" in the present invention. The green LD 362a is an example of the "green laser beam generation portion" in the present invention. The blue LD 363a is an example of the "blue laser beam generation portion" in the present invention.

The laser beam source 360 further includes three collimator lenses 364, three polarizing beam splitters 365a, 365b, and 365c, a light detector 366, a lens 367, a MEMS mirror 368a to scan laser beams in the horizontal direction and the vertical direction, and an actuator 370 to drive the MEMS mirror 368a in the horizontal direction and the vertical direction. The MEMS mirror 368a is an example of the "projection portion" in the present invention. The collimator lenses 364, the polarizing beam splitters 365a, 365b, and 365c, and the lens 367 are examples of the "optical system" in the present invention.

The laser beams emitted from the red LD 361a, the green LD 362a, and the blue LD 363a are incident upon the common MEMS mirror 368a. The MEMS mirror 368a scans the red, green, and blue laser beams emitted from the red LD 361a, the green LD 362a, and the blue LD 363a, whereby the images 301a and 302a are projected on the table 301 and the screen 302, respectively. The MEMS mirror 368a is configured to project images on arbitrary projection regions by scanning the laser beams emitted from the laser beam source 360.

As shown in Fig. 13, the operation panel 320 is provided on a front or side surface of a housing of the projector 300. The operation panel 320 includes a display (not shown) to display operation contents, switches accepting operational inputs into the projector 300, and so on, for example. The operation panel 320 is configured to transmit a signal responsive to operation contents to the control portion 331 of the control processing block 330 when accepting an operation of the user.

The projector 300 is so configured that the external video signal supplied from outside is input into the video I/F 332. The external I/F 334 is so configured that the portable memory 392 such as an SD card or a USB memory is mountable thereon. A PC or the like is connectable to the external I/F 334 through a cable or the like, and the external I/F 334 is configured to serve as an output portion capable of transmitting positional information or the like of the stylus pen grasped by the user to the PC. The projector 300 is so configured that the control portion 331 retrieves data from the portable memory 392 and the video RAM 371 stores the retrieved data.

The control portion 331 is configured to control display of a picture based on image data temporarily held in the video RAM 371 by intercommunicating with the timing controller 343 of the data processing block 340.

In the data processing block 340, the timing controller 343 is configured to retrieve data held in the video RAM 371 through the data controller 344 on the basis of a signal output from the control portion 331. The data controller 344 is configured to transmit the retrieved data to the bit data converter 342. The bit data converter 342 is configured to transmit the data to the data/gradation converter 341 on the basis of a signal from the timing controller 343. The bit data converter 342 has a function of converting externally supplied image data into data suitable to a system projectable with the laser beams.

The data/gradation converter 341 is configured to convert the data output from the bit data converter 342 into color gradation data of red (R), green (G), and blue (B) and to transmit the gradation data after conversion to the red laser control circuit 361, the green laser control circuit 362, and the blue laser control circuit 363.

The red laser control circuit 361 is configured to control the red LD 361a to exhibit a laser output value corresponding to the gradation on the basis of the gradation data received from the data/gradation converter 341. The green laser control circuit 362 is configured to control the green LD 362a to exhibit a laser output value corresponding to the gradation on the basis of the gradation data received from the data/gradation converter 341. The blue laser control circuit 363 is configured to control the blue LD 363a to exhibit a laser output value corresponding to the gradation on the basis of the gradation data received from the data/gradation converter 341.

The silicon photodiode 310a provided on the side surface of the projector 300 closer to the side on which the image 301a is projected is configured to detect the laser beams emitted from the laser beam source 360 and reflected by a detection object. Furthermore, the silicon photodiode 310a is configured to input a signal received therein into the control portion 331 through the converter 352.

According to the third embodiment, the control portion 331 is configured to analyze gradations of input image information, calculate the expected detection voltage of the silicon photodiode 310a on the basis of the laser output values as analytical results of the gradations, the reflectance values of the detection object, the transmittance values of the optical system, and the detection sensitivity characteristics of the silicon photodiode 310a, and set the detection threshold of the silicon photodiode 310a on the basis of the expected detection voltage to detect the laser beams reflected by the detection object.

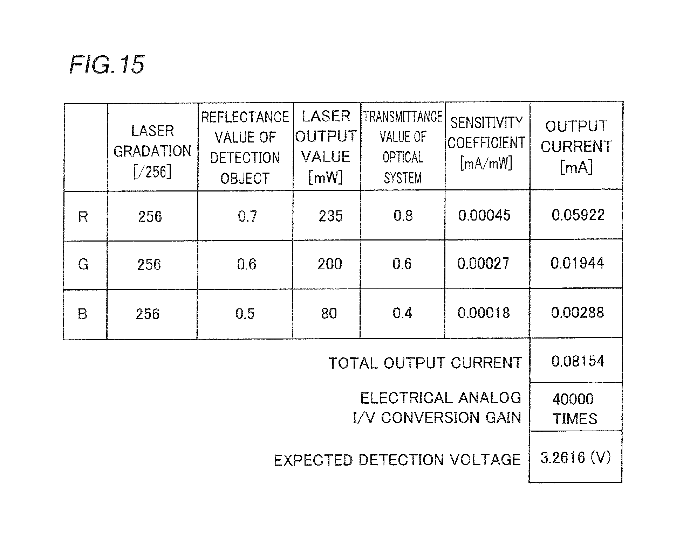

More specifically, the control portion 331 is configured to read information related to gradations from the external video signal input through the video I/F 332 or the image signal input from the portable memory 392 connected thereto through the external I/F 334 and to acquire the laser output values of the red LD 361a, the green LD 362a, and the blue LD 363a as the analytical results of the gradations. Furthermore, the control portion 331 calculates the laser output values as to the respective ones of the red LD 361a, the green LD 362a, and the blue LD 363a. In a case of projecting a white image, for example, all of the red, green and blue laser beams are output with the maximum 256 gradations, and the red LD 361a, the green LD 362a, and the blue LD 363a exhibit laser output values of 235 (mW), 200 (mW), and 80 (mW), respectively at this time, as shown in Fig. 15. Thus, the output values of the maximum gradations vary with the red, green, and blue laser beams. When the color of the projected image is not white, the laser output values of the red LD 361a, the green LD 362a, and the blue LD 363a fluctuate in response to ratios of change of the gradations of red, green, and blue with respect to white. The reflectance of the detection object varies with the red, green, and blue laser beams. The transmittance values of the optical system correspond to those of the laser beams with respect to the collimator lenses 364, the polarizing beam splitters 365a, 365b, and 365c, the lens 367, the beam splitter 380, and the magnifying lenses 390 and 391, and vary with the red, green, and blue laser beams. The gradations are examples of the "color information" in the present invention. The control portion 331 is an example of the "detection threshold set portion" in the present invention.

The control portion 331 is configured to measure (to perform offset calculation of) the reflectance of the detection object varying with the red, green, and blue laser beams and the transmittance of the optical system varying with the red, green, and blue laser beams before any image is input into the projector 300. The control portion 331 calculates the expected detection voltage by employing sensitivity coefficients for the red, green, and blue laser beams obtained on the basis of the detection sensitivity characteristics of the silicon photodiode 310a shown in Fig. 14. According to the third embodiment, the sensitivity coefficients of the silicon photodiode 310a for the red, green, and blue laser beams are 0.00045 (mA/mW), 0.00027 (mA/mW), and 0.00018 (mA/mW), respectively. The control portion 331 is configured to read information of the detection sensitivity characteristics of the silicon photodiode 310a from the RAM 333.

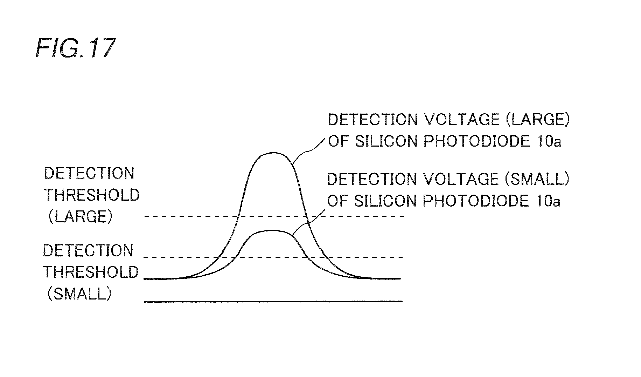

The control portion 331 calculates an output current by multiplying the laser output value as the analytical result of the gradation, the reflectance value of the detection object, the transmittance value of the optical system, and the sensitivity coefficient together as to each of the red (R), green (G), and blue (B) laser beams and calculates a total output current (0.08154 mA) by adding up the output currents of the red, green, and blue laser beams, as shown in Fig. 15. Thereafter, the control portion 331 calculates the expected detection voltage (3.2616 V) by multiplying the total output current by an electric analog I/V gain (40000 times). According to the third embodiment, the control portion 331 is configured to set a value obtained by multiplying the calculated expected detection voltage (3.2616 V) by a prescribed percentage (50%, for example) as the detection threshold (1.6308 V). Thus, the set detection threshold varies in response to the magnitude of the expected detection voltage of the silicon photodiode 310a, as shown in Fig. 17. In other words, a large detection threshold (large) is set in response to the expected detection voltage (large) when the expected detection voltage of the silicon photodiode 310a is large (in a case of the expected detection voltage (large)), and a small detection threshold (small) is set in response to the expected detection voltage (small) when the expected detection voltage of the silicon photodiode 310a is smaller than the expected detection voltage (large) (in a case of the expected detection voltage (small)). The expected detection voltage is an example of the "expected detection value" in the present invention. Furthermore, the control portion 331 is configured to analyze a laser output value every time a different image signal is input and set the detection threshold of the silicon photodiode 310a on the basis of the analytical result of the laser output value every time a different image signal is input.

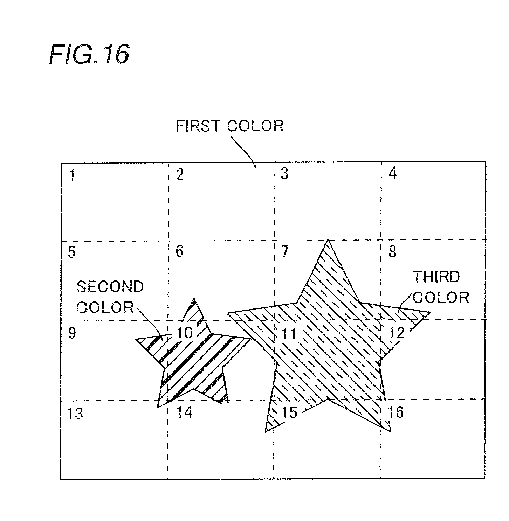

According to the third embodiment, the control portion 331 is configured to calculate an average gradation with respect to each of sixteen different regions (regions 1 to 16) of the projection region divided in the form of a lattice, as shown in Fig. 16 and set a detection threshold with respect to each of the regions on the basis of the average gradation. More detailedly, the control portion 331 is configured to calculate the laser output values of the red LD 361a, the green LD 362a, and the blue LD 363a from the average gradation with respect to each of the regions and calculate an expected detection voltage for a corresponding region on the basis of the calculation values, the reflectance values of the detection object, the transmittance values of the optical system, and the sensitivity coefficients. The control portion 331 is configured to set the detection threshold for each of the regions, employing the different expected detection voltage for each of the regions.

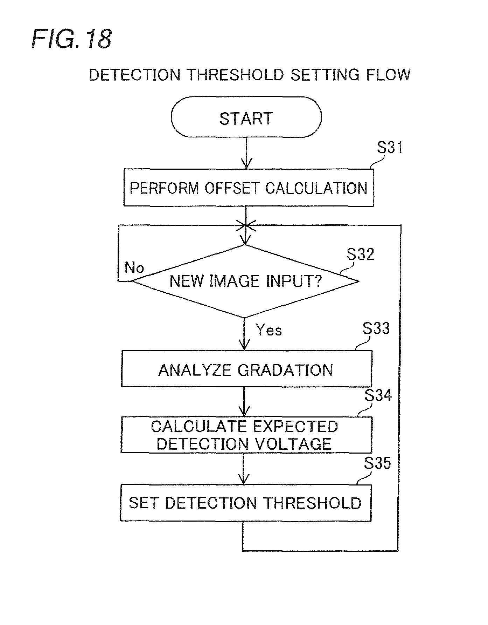

Next, processing for setting the detection threshold of the silicon photodiode 310a by the control portion 331 of the projector 300 according to the third embodiment is described with reference to Fig. 18.

The processing for setting the detection threshold of the silicon photodiode 310a shown in Fig. 18 is started when the projector 300 is powered on.

At a step S31, the control portion 331 measures (performs offset calculation of) the different reflectance values of the detection object for the red, green, and blue laser beams and the different transmittance values of the optical system (the collimator lenses 364, the polarizing beam splitters 365a, 365b, and 365c, the lens 367, the beam splitter 380, and the magnifying lenses 390 and 391) for the red, green, and blue laser beams. Thus, the reflectance values of the detection object for the red, green, and blue laser beams and the transmittance values of the optical system for the red, green, and blue laser beams are acquired. According to the third embodiment, the control portion 331 performs offset calculation only once after the projector 300 is powered on, and employs the same reflectance values and transmittance values until the projector 300 is powered off.

Next, at a step S32, the control portion 331 determines whether or not a new image has been input into the projector 300 through the video 1/F 332 or the external I/F 334. The control portion 331 repeats this determination until a new image has been input into the projector 300, and advances to a step S33 if a new image has been input into the projector 300.

At the step S33, information related to gradations is read from the external video signal input through the video I/F 332 or the image signal input from the portable memory 392 connected thereto through the external I/F 334. Then, the control portion 331 calculates the average gradation with respect to each of the regions shown in Fig. 16. For example, in the region 10, a first color (color close to green, for example), a second color (color close to yellow, for example), and a third color (color close to red, for example) are present, and hence the average gradation of the region 10 is obtained from the gradations of red (R), green (G), and blue (B) with respect to these colors and the area ratio (number of dots) of these colors. On the other hand, in the region 2, only the first color (color close to green, for example) is present, and hence the average gradation of the region 2 is an average value of the gradations of R, G, and B constituting the first color (color close to green, for example). Thereafter, the control portion 331 acquires the laser output values of the red LD 361a, the green LD 362a, and the blue LD 363a as the analytical results of the gradations with respect to each of the regions, employing the average gradation.

Next, at a step S34, the control portion 331 calculates the expected detection voltage with respect to each of the regions on the basis of the acquired laser output values, the reflectance values for the red, green, and blue laser beams, the transmittance values of the optical system for the red, green, and blue laser beams, and the sensitivity coefficients for the red, green, and blue laser beams.

Next, at a step S35, the control portion 331 sets the value obtained by multiplying the expected detection voltage calculated with respect to each of the regions by the prescribed percentage (50%, for example) as the detection threshold of the silicon photodiode 310a for the corresponding region. Thereafter, the control portion 331 returns to the step S32 and sets the detection threshold every time a new image signal is input.

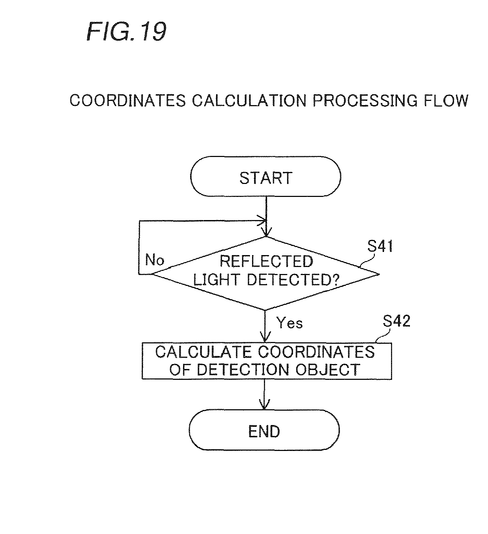

Next, processing for calculating the coordinates of the detection object by the control portion 331 of the projector 300 according to the third embodiment is described with reference to Fig. 19.

At a step S41, the control portion 331 determines whether or not the red, green, and blue laser beams reflected by the detection object (the user's finger or the stylus pen), emitted from the red LD 361a, the green LD 362a, and the blue LD 363a have been detected by the silicon photodiode 310a. At this time, the control portion 331 makes the determination on the basis of the detection threshold for each of the regions set by the aforementioned processing for setting the detection threshold. When the detection object is located in a region of the regions 1 to 16 shown in Fig. 16, for example, the control portion 331 determines that the detection object has been detected if a voltage input through the converter 352 from the silicon photodiode 310a is larger than the detection threshold set with respect to the aforementioned region, and determines that the detection object has not been detected if the voltage is not larger than the detection threshold. If the red, green, and blue laser beams reflected by the detection object are not detected by the silicon photodiode 310a, the operation at the step S41 is repeated.

If determining that the red, green, and blue laser beams reflected by the detection object have been detected by the silicon photodiode 310a at the step S41, the control portion 331 advances to a step S42. At the step S42, the control portion 331 calculates the coordinates of the detection object on the table 301 on the basis of timing at which the silicon photodiode 310a detects the beams reflected by the detection object and a position scanned by the MEMS mirror 368a.

According to the third embodiment, as hereinabove described, the control portion 331 analyzing the gradation of the input image signal and setting the detection threshold of the silicon photodiode 310a on the basis of at least the analytical result of the gradation to detect the laser beams reflected by the detection object is provided, whereby the detection threshold appropriate to each image can be set on the basis of the analytical result of the gradation of the image signal when an image of a color difficult to detect and an image of a color easy to detect are present due to a difference between the laser output values or the like of colors of the projected image, and hence a variation in detection accuracy depending on the projected image can be suppressed.

According to the third embodiment, as hereinabove described, the control portion 331 is configured to set the detection threshold of the silicon photodiode 310a on the basis of the detection sensitivity characteristics of the silicon photodiode 310a in addition to the analytical result of the gradation to detect the laser beams reflected by the detection object, whereby the detection threshold more appropriate to the projected image can be set on the basis of the detection sensitivity characteristics of the silicon photodiode 310a with respect to red, green, and blue in addition to the gradation of the input image signal, and hence a variation in detection accuracy depending on the projected image can be further suppressed.

According to the third embodiment, as hereinabove described, the control portion 331 is configured to calculate the expected detection voltage on the basis of the analytical result of the gradation and the detection sensitivity characteristics of the silicon photodiode 310a and set the detection threshold of the silicon photodiode 310a on the basis of the expected detection voltage, whereby the control portion 331 can easily set the detection threshold, employing the expected detection voltage calculated from the analytical result of the gradation and the detection sensitivity characteristics of the silicon photodiode 310a.

According to the third embodiment, as hereinabove described, the control portion 331 is configured to set the detection threshold of the silicon photodiode 310a on the basis of the detection sensitivity characteristics of the silicon photodiode 310a for each wavelength, whereby the detection threshold of the silicon photodiode 310a appropriate to the projected image can be accurately set employing the detection sensitivity characteristics for each wavelength even if a projection image is formed with a plurality of red, green, and blue laser beams of different wavelengths.

According to the third embodiment, as hereinabove described, the control portion 331 is configured to set the detection threshold of the silicon photodiode 310a on the basis of the reflectance values of the detection object for the laser beams in addition to the analytical result of the gradation and the detection sensitivity characteristics of the silicon photodiode 310a, whereby the detection threshold of the silicon photodiode 310a can be set in consideration of the reflectance values of the detection object in addition to the analytical result of the gradation and the detection sensitivity characteristics of the silicon photodiode 310a, and hence the detection threshold appropriate to the projected image can be more accurately set even if the reflectance values of the detection object for the laser beams vary with the colors of the laser beams.

According to the third embodiment, as hereinabove described, the control portion 331 is configured to set the detection threshold of the silicon photodiode 310a on the basis of the transmittance values of the collimator lenses 364, the polarizing beam splitters 365a, 365b, and 365c, the lens 367, the beam splitter 380, and the magnifying lenses 390 and 391 for the laser beams in addition to the analytical result of the gradation and the detection sensitivity characteristics of the silicon photodiode 310a, whereby the detection threshold can be calculated in consideration of the transmittance values of the optical system for the laser beams in addition to the analytical result of the gradation and the detection sensitivity characteristics of the silicon photodiode 310a, and hence the detection threshold appropriate to the projected image can be more accurately calculated even if the transmittance values of the optical system for the laser beams vary with the colors of the laser beams.

According to the third embodiment, as hereinabove described, the laser beam source 360 including the red LD 361a emitting the red laser beam, the green LD 362a emitting the green laser beam, and the blue LD 363a emitting the blue laser beam is provided, and the control portion 331 is configured to set the detection threshold of the silicon photodiode 310a on the basis of the analytical result of the gradation of each of the red LD 361a, the green LD 362a, and the blue LD 363a, whereby the detection threshold appropriate to the projected image can be easily set on the basis of the analytical result of the gradation of each of the red LD 361a, the green LD 362a, and the blue LD 363a.

According to the third embodiment, as hereinabove described, the control portion 331 is configured to set the detection threshold of the silicon photodiode 310a on the basis of the laser output value as the analytical result of the gradation of each of the red LD 361a, the green LD 362a, and the blue LD 363a, whereby the detection threshold appropriate to the projected image can be more easily set on the basis of the laser output value as the analytical result of the gradation of each of the red LD 361a, the green LD 362a, and the blue LD 363a. Particularly when the maximum laser output varies from color to color, the detection threshold appropriate to the colors of the projected image can be effectively set.

According to the third embodiment, as hereinabove described, the control portion 331 is configured to calculate the expected detection voltage on the basis of the laser output value of each of the red LD 361a, the green LD 362a, and the blue LD 363a and the detection sensitivity characteristics of the silicon photodiode 310a and set the detection threshold of the silicon photodiode 310a on the basis of the expected detection voltage, whereby the control portion 331 can more accurately set the detection threshold, employing the expected detection voltage calculated from the laser output value of each of the red LD 361a, the green LD 362a, and the blue LD 363a and the detection sensitivity characteristics of the silicon photodiode 310a even if the projection image is formed with a plurality of red, green, and blue laser beams having the laser output values of the colors of the projected image different from each other and the wavelengths different from each other.

According to the third embodiment, as hereinabove described, the control portion 331 is configured to calculate the expected detection voltage of the silicon photodiode 310a on the basis of the different reflectance values of the detection object for the red, green, and blue laser beams in addition to the laser output value of each of the red LD 361a, the green LD 362a, and the blue LD 363a and the detection sensitivity characteristics of the silicon photodiode 310a, whereby the expected detection voltage of the silicon photodiode 310a can be accurately calculated in consideration of the different reflectance values of the detection object for the laser beams in addition to the laser output value of each of the red LD 361a, the green LD 362a, and the blue LD 363a and the detection sensitivity characteristics of the silicon photodiode 310a. Thus, the detection threshold appropriate to the projected image can be more accurately set.

According to the third embodiment, as hereinabove described, the control portion 331 is configured to calculate the expected detection voltage of the silicon photodiode 310a on the basis of the different transmittance values of the collimator lenses 364, the polarizing beam splitters 365a, 365b, and 365c, the lens 367, the beam splitter 380, and the magnifying lenses 390 and 391 for the red, green, and blue laser beams in addition to the laser output value of each of the red LD 361a, the green LD 362a, and the blue LD 363a and the detection sensitivity characteristics of the silicon photodiode 310a, whereby the expected detection voltage can be accurately calculated in consideration of the different transmittance values of the optical system for the laser beams in addition to the laser output value of each of the red LD 361a, the green LD 362a, and the blue LD 363a and the detection sensitivity characteristics of the silicon photodiode 310a. Thus, the detection threshold appropriate to the projected image can be more accurately set.

According to the third embodiment, as hereinabove described, the control portion 331 is configured to set the value obtained by multiplying the expected detection voltage by the prescribed percentage (50%) as the detection threshold of the silicon photodiode 310a, whereby the detection threshold appropriate to the projected image can be easily set simply by multiplying the expected detection voltage by the prescribed percentage (50%, for example).

According to the third embodiment, as hereinabove described, the control portion 331 is configured to analyze the gradation with respect to each of the sixteen different regions 1 to 16 of the projection region divided in the form of a lattice and set the detection threshold of the silicon photodiode 310a with respect to each of the different regions 1 to 16 on the basis of the analytical result of the gradation with respect of each of the different regions 1 to 16, whereby the projection region can be easily divided into a plurality of different regions 1 to 16, and hence a variation in detection accuracy in the different regions 1 to 16 can be easily suppressed.

According to the third embodiment, as hereinabove described, the control portion 331 is configured to analyze the gradation every time a different image signal is input and set the detection threshold of the silicon photodiode 310a on the basis of the analytical result of the gradation every time a different image signal is input, whereby the detection threshold of the silicon photodiode 310a is reset every time a different image signal is input, and hence the detection threshold appropriate to the projected image can be reliably set.

### (Fourth Embodiment)

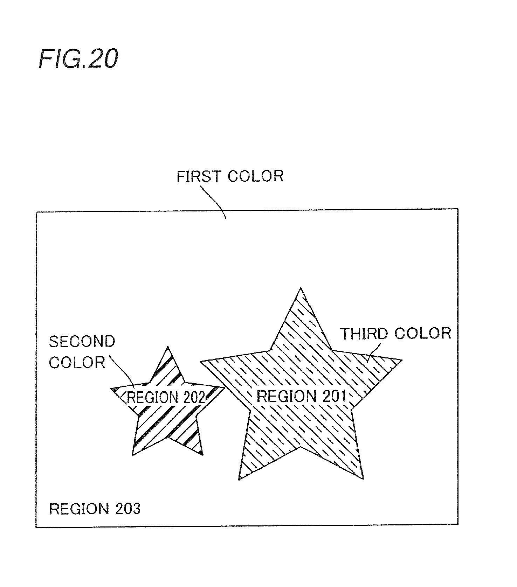

A projector 400 according to a fourth embodiment of the present invention is now described with reference to Fig. 20.

In this fourth embodiment, a control portion 431 is configured to set a detection threshold with respect to each of different regions of a projection region divided on the basis of the gradation of the projection region, dissimilarly to the aforementioned third embodiment.

In this fourth embodiment, the control portion 431 is configured to calculate an average gradation with respect to each of the different regions (regions 201 to 203) of the projection region divided on the basis of the gradation of the projection region, as shown in Fig. 20 and set the detection threshold with respect to each of the regions on the basis of the average gradation. In the fourth embodiment, the control portion 431 is configured to divide the region by different colors and determine the detection threshold with respect to each of the regions, similarly to the aforementioned third embodiment. More detailedly, the control portion 431 is configured to calculate the laser output values of red, green, and blue by analyzing the gradations of R, B, and G of the colors of the regions and calculate an expected detection voltage for a corresponding region on the basis of the calculated values. The control portion 431 is configured to set the detection threshold for each of the regions, employing the different expected detection voltage for each of the regions.

The remaining structure of the fourth embodiment is similar to that of the aforementioned third embodiment.

According to the fourth embodiment, as hereinabove described, the control portion 431 is configured to analyze the gradation with respect to each of the different regions 201 to 203 of the projection region divided by the colors and set the detection threshold of a silicon photodiode 410a with respect to each of the different regions 201 to 203 on the basis of an analytical result of the gradation with respect to each of the different regions 201 to 203, whereby a variation in detection accuracy in the regions 201 to 203 obtained by dividing the projection region by the colors can be further suppressed as compared with the aforementioned third embodiment in which the projection region is divided simply in the form of a lattice.

The remaining effects of the fourth embodiment are similar to those of the aforementioned third embodiment.

Although the present invention has been described and illustrated in detail, it is clearly understood that the same is by way of illustration and example only and is not to be taken by way of limitation, the spirit and scope of the present invention being limited only by the terms of the appended claims.

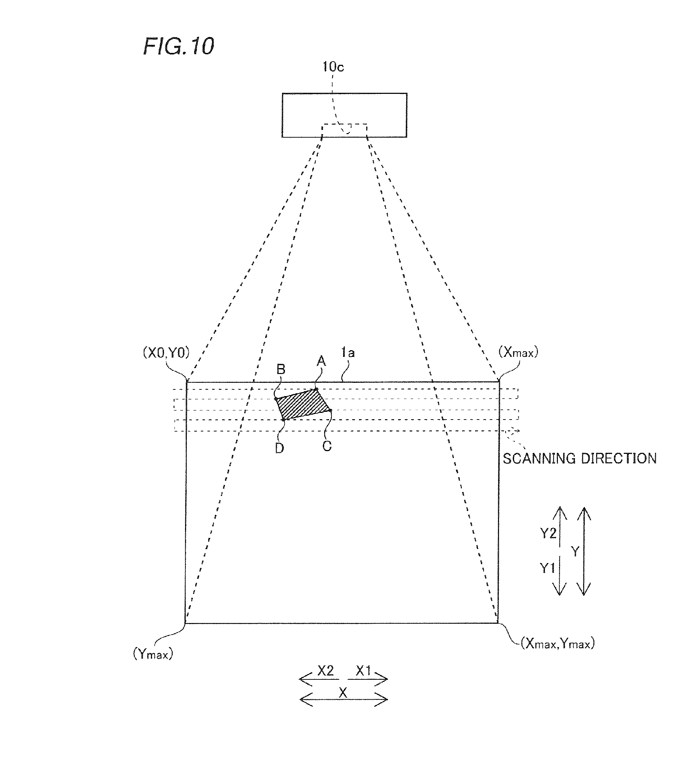

For example, while the correction values are acquired from the reference signals corresponding to the laser beams reflected by the coordinate points 1 to 8 in the region corresponding to a row of the scan field, of the table 1 scanned by the MEMS mirror 68a in each of the aforementioned first and second embodiments, the present invention is not restricted to this. For example, the correction values may alternatively be acquired from reference signals corresponding to laser beams reflected by four coordinate points in a region corresponding to four rows of the scan field, of the table 1 scanned by the MEMS mirror 68a, as in a first modification shown in Fig. 10. In this case, the control portion 31 is preferably configured to acquire the correction values from reference signals corresponding to laser beams reflected by four coordinate points A, B, C, and D in the region corresponding to four rows of the scan field, of the table 1 scanned by the MEMS mirror 68a. Furthermore, the control portion 31 may alternatively acquire correction values of a region (shaded area) surrounded by the four coordinate points A, B, C, and D on the basis of the reference signals of the four coordinate points A, B, C, and D. More specifically, the control portion 31 may alternatively acquire the correction values of the region surrounded by the four coordinate points A, B, C, and D from the average value of the reference signals of the four coordinate points A, B, C, and D. Thus, the number of coordinate points where correction values are acquired is reduced as compared with a case where the correction values are acquired from reference signals corresponding to laser beams reflected by coordinate points in a region corresponding to a part of the scan field, of the table 1, and hence processing load on the control portion 31 can be reduced.

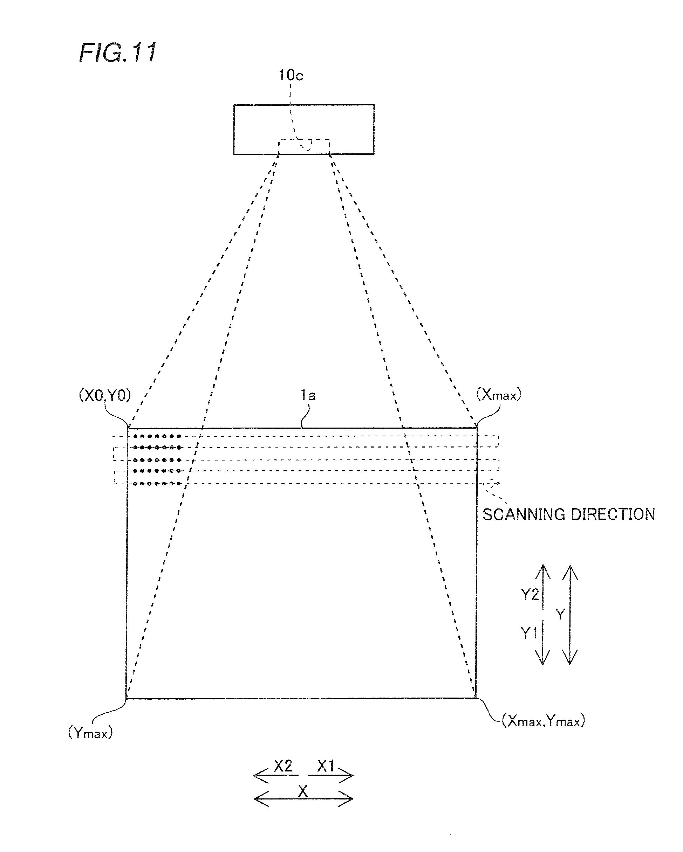

While the correction values are acquired from the reference signals corresponding to the laser beams reflected by the coordinate points 1 to 8 in the region corresponding to a row of the scan field, of the table 1 scanned by the MEMS mirror 68a in each of the aforementioned first and second embodiments, the present invention is not restricted to this. For example, the correction values may alternatively be acquired from reference signals corresponding to laser beams reflected by points corresponding to all coordinates of the table 1 scanned by the MEMS mirror 68a, as in a second modification shown in Fig. 11. In this case, the control portion 31 is preferably configured to acquire the correction values from the reference signals corresponding to the laser beams reflected by the points corresponding to all coordinates of the table 1 scanned by the MEMS mirror 68a. Although points are drawn only on the coordinates of a partial region of the table 1 for convenience in Fig. 11, points are actually drawn on all coordinates of the table 1. Thus, the correction values are acquired from the points corresponding to all coordinates of the table 1 so that the detection signals can be accurately corrected over the entire area of the table 1, dissimilarly to a case where the correction values are acquired from points corresponding to the coordinates of a part of the table 1.

While the reference signals corresponding to the laser beams reflected by the table 1 and detected by the photodetector 10a are corrected on the basis of the reference signals corresponding to the red, green, and blue laser beams in each of the aforementioned first and second embodiments, the present invention is not restricted to this. For example, the correction values may alternatively be acquired from reference signals corresponding to laser beams reflected by the table 1 and the user's finger, of a white (one-colored) image as a reference image projected by the MEMS mirror 68a, and the detection signals output from the photodetector 10a may alternatively be corrected on the basis of the acquired correction values. In this case, when the correction values are prepared at the step S3 of the control flow in Fig. 8 shown in the aforementioned first embodiment, the correction values may be acquired from the reference signals corresponding to the laser beams reflected by the table 1, of the white (one-colored) image as the reference image. If an image containing a plurality of colors is projected on each of a plurality of regions of the table 1 when the correction values are acquired, ease of reflecting laser beams by the table 1 and the user's finger varies with colors of the image projected on each of the plurality of regions of the table 1 so that it is difficult to accurately acquire the correction values over the entire area of the table 1. On the other hand, if the white image projected by the MEMS mirror 68a is projected over the entire area of the table 1 as in each of the aforementioned first and second embodiments, ease of reflecting laser beams by the table 1 and the user's finger can be inhibited from varying over the entire area of the table 1. Thus, the correction values can be accurately acquired over the entire area of the table 1. While the white (one-colored) image is shown as an example of the reference image for acquiring the correction values, the reference image may alternatively be other than the white (one-colored) image so far as the correction values can be acquired.

While the detection signals detected by the photodetector 10a are corrected on the basis of the reference signals corresponding to the red, green, and blue laser beams in each of the aforementioned first and second embodiments, the present invention is not restricted to this. For example, the detection signals detected by the photodetector 10a may alternatively be corrected on the basis of a reference signal corresponding to an infrared laser beam, employing the infrared laser beam that is invisible.

While the correction values of one frame are acquired in each of the aforementioned first and second embodiments, the present invention is not restricted to this. For example, correction values of plural frames may alternatively be acquired from reference signals corresponding to laser beams of the plural frames reflected by the table 1 scanned by the MEMS mirror 68a, and detection signals output from the photodetector 10a may alternatively be corrected on the basis of the acquired correction values of the plural frames. Thus, the correction values of the plural frames are acquired, and hence the accuracy of the correction values can be further improved as compared with a case where the correction values of one frame are acquired.

While the correction values are acquired every frame in each of the aforementioned first and second embodiments, the present invention is not restricted to this. For example, the correction values may alternatively be acquired at the start of laser beam emission (upon start-up of the projector 100). In this case, the correction values may be acquired at the step S3 of the control flow in Fig. 8 shown in the aforementioned first embodiment, and thereafter the detection signals may be corrected with the acquired correction values. Furthermore, the correction values may alternatively be acquired every few frames. In this case, the correction values may be acquired at the step S3 of the control flow in Fig. 8 shown in the aforementioned first embodiment every two or three frames and may continue to be overwritten. Thus, the number of frames in which the correction values are acquired is reduced as compared with a case where the correction values are acquired every frame, and hence processing load on the control portion 31 can be reduced.

While the detection signals detected by the photodetector 10a are corrected on the basis of the reference signals corresponding to the laser beams reflected by the table 1 in each of the aforementioned first and second embodiments, the present invention is not restricted to this. For example, the correction values may alternatively be acquired from reference signals corresponding to combined light of the laser beams reflected by the table 1 and outside light, such as sunlight, reflected by the table 1 or outside light directly emitted to the photodetector 10a, and detection signals output from the photodetector 10a may alternatively be corrected on the basis of the acquired correction values. Thus, the influence of the outside light on the photodetector 10a is suppressed, and hence the accuracy of recognizing the user's finger on the table 1 by the laser beams can be further improved.

While the color information according to the present invention is the gradation in each of the aforementioned third and fourth embodiments, the present invention is not restricted to this. According to the present invention, the color information may alternatively be other than the gradation.

While the expected detection voltage is calculated in consideration of both the reflectance values of the detection object and the transmittance values of the optical system in addition to the analytical result of the color information and the detection sensitivity characteristics of the detecting portion (silicon photodiode) in each of the aforementioned third and fourth embodiments, the present invention is not restricted to this. According to the present invention, the expected detection voltage may alternatively be calculated with only either the reflectance values of the detection object or the transmittance values of the optical system or may alternatively be calculated on the basis of only the analytical result of the color information and the detection sensitivity characteristics of the detecting portion (silicon photodiode) without consideration of both the reflectance values of the detection object and the transmittance values of the optical system. Furthermore, according to the present invention, the detection threshold may alternatively be set on the basis of only the analytical result of the color information (gradation) without consideration of the detection sensitivity characteristics of the detecting portion.

While the expected detection voltage of the silicon photodiode is employed as the expected detection value according to the present invention in each of the aforementioned third and fourth embodiments, the present invention is not restricted to this. According to the present invention, the total output current of the silicon photodiode may alternatively be employed as the expected detection value.

While the detection threshold is set with respect to each of the different regions into which the projection region is divided in each of the aforementioned third and fourth embodiments, the present invention is not restricted to this. According to the present invention, one detection threshold may alternatively be set with respect to the entire projection region without dividing the projection region or may alternatively be set in dots.

While the silicon photodiode is shown as the example of the detecting portion in each of the aforementioned third and fourth embodiments, the present invention is not restricted to this. According to the present invention, the detecting portion may alternatively be other than the silicon photodiode.

While the flowchart in which the processing operation of the control portion is described on event-driven basis at the start and on flow-driven basis after the start is employed for convenience of description in each of the aforementioned third and fourth embodiments, the present invention is not restricted to this. The processing operation of the control portion may alternatively be performed on completely event-driven basis, on completely flow-driven basis, or in parallel.

While the projection region is divided by the different colors as the structure of dividing the projection region on the basis of the gradation of the projection region in the aforementioned fourth embodiment, the present invention is not restricted to this. According to the present invention, the projection region may alternatively be divided by the ranges of the gradation such as gradations 1 to 20 and gradations 21 to 40 on the basis of the gradation, for example.

## Claims

1. A projector (100) comprising:
a laser beam emitting portion (61a, 62a, 63a) emitting laser beams;
a projection portion (68a) projecting an image (1a) on an arbitrary projection region (1) by scanning said laser beams emitted from said laser beam emitting portion; and
a detecting portion (10a) detecting a laser beam reflected by said projection region and a detection object, of said laser beams emitted from said laser beam emitting portion and outputting a detection signal corresponding to detected said laser beam, wherein
said detection signal output from said detecting portion is corrected on the basis of a reference signal corresponding to said laser beam reflected by said projection region and detected by said detecting portion.

2. The projector according to claim 1, further comprising a control portion (31) correcting said detection signal by subtracting a correction value based on said reference signal corresponding to said laser beam reflected by said projection region from said detection signal output from said detecting portion.

3. The projector according to claim 2, further comprising a storage portion (33) storing said correction value based on said reference signal corresponding to said laser beam reflected by said projection region, wherein
said control portion is configured to correct said detection signal by subtracting said correction value based on said reference signal stored in said storage portion from said detection signal output from said detecting portion.

4. The projector according to claim 2, wherein
said control portion is configured to correct said detection signal by subtracting an average value of said reference signal corresponding to said laser beam reflected by said projection region employed as said correction value from said detection signal output from said detecting portion.

5. The projector according to claim 2, wherein
said control portion is configured to acquire a correction value from said reference signal corresponding to said laser beam reflected by a point or region corresponding to prescribed coordinates of said projection region scanned by said projection portion and correct said detection signal output from said detecting portion on the basis of acquired said correction value.

6. The projector according to claim 5, wherein
said control portion is configured to acquire correction values from said reference signal corresponding to said laser beam reflected by points corresponding to all coordinates of said projection region scanned by said projection portion and correct said detection signal output from said detecting portion corresponding to at least a frame in which said correction values are acquired on the basis of acquired said correction values.

7. The projector according to claim 5, wherein
said control portion is configured to acquire correction values from said reference signal corresponding to said laser beam reflected by a plurality of coordinate points in a region corresponding to a row of a scan field, of said projection region scanned by said projection portion and correct said detection signal output from said detecting portion corresponding to at least a frame in which said correction values are acquired on the basis of acquired said correction values.

8. The projector according to claim 5, wherein
said control portion is configured to acquire correction values from said reference signal corresponding to said laser beam reflected by a plurality of coordinate points in a region corresponding to plural rows of a scan field, of said projection region scanned by said projection portion and correct said detection signal output from said detecting portion corresponding to at least a frame in which said correction values are acquired on the basis of acquired said correction values.

9. The projector according to claim 5, wherein
said control portion is configured to acquire correction values of plural frames from reference signals corresponding to laser beams of said plural frames reflected by said projection region scanned by said projection portion and correct said detection signal output from said detecting portion on the basis of acquired said correction values of said plural frames.

10. The projector according to claim 2, wherein
said control portion is configured to correct said detection signal output from said detecting portion on the basis of said correction value acquired from said reference signal corresponding to said laser beam of a frame other than a frame in which said detection signal output from said detecting portion exceeds a threshold to determine whether or not there is said detection object on said projection region if determining that said detection signal exceeds said threshold.
